(19)

Europäisches Patentamt
European Patent Office
Office européen des brevets

(11) **EP 4 749 326 A2**

(12) **DEMANDE DE BREVET EUROPEEN**

(43) Date de publication:
**27.05.2026 Bulletin 2026/22**

(21) Numéro de dépôt: **26172478.5**

(22) Date de dépôt: **07.12.2023**

(51) Classification Internationale des Brevets (IPC):
*G01S 13/58* *(2006.01)*

(52) Classification Coopérative des Brevets (CPC):
**G01S 13/20; G01S 7/288; G01S 7/2921; G01S 7/2925; G01S 7/2926; G01S 7/414; G01S 13/30; G01S 13/426; G01S 13/582;** G01S 2013/0245

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **16.12.2022 FR 2213554**

(62) Numéro(s) de document de la (des) demande(s) initiale(s) en application de l'article 76 CBE:
**23214967.4 / 4 386 442**

(71) Demandeur: **THALES**
**92190 Meudon (FR)**

(72) Inventeurs:
• **GILLIOT, Adrien**
**33700 MERIGNAC (FR)**

• **CORRETJA, Vincent**
**33700 MERIGNAC (FR)**
• **KEMKEMIAN, Stéphane**
**78995 ELANCOURT (FR)**
• **LEGER, Nicolas**
**33700 MERIGNAC (FR)**

(74) Mandataire: **Atout PI Laplace**
**Immeuble Up On**
**25 Boulevard Romain Rolland**
**CS 40072**
**75685 Paris Cedex 14 (FR)**

Remarques:
Cette demande a été déposée le 15/04/2026 comme demande divisionnaire de la demande mentionnée sous le code INID 62.

(54) **PROCÉDÉ DE CARACTÉRISATION DE CIBLE POUR UN DISPOSITIF DE DÉTECTION DU TYPE RADAR OU SONAR MULTI-PANNEAUX À BALAYAGE ÉLECTRONIQUE**

(57) L'invention se rapporte à un procédé de caractérisation de cible pour un dispositif de détection du type radar ou sonar multi-panneaux à balayage électronique, comprenant les étapes consistant à :
- générer une pluralité d'impulsions sur une pluralité de panneaux d'antenne (PE1, PE2, PE3) du dispositif de détection selon un motif d'entrelacement temporel et angulaire, de façon à effectuer un balayage sur tout le domaine gisement du dispositif de détection ;
- générer une pluralité de cartes de détection, par acquisition d'une pluralité d'observations combinées entre elles par intégration cohérente ou non cohérente des échos correspondant à la pluralité d'impulsions, chaque carte de détection étant obtenue dans une direction donnée (EL1, EL2, EL3) correspondant à la largeur du lobe principal du panneau d'antenne ;
- combiner les cartes de détection de façon à détecter une présence d'une cible dans le domaine gisement du dispositif de détection.

[Fig. 4]

FIG. 4

## Description

### Domaine technique

L'invention se rapporte à un procédé de caractérisation de cible pour un dispositif de détection du type radar ou sonar multi-panneaux à balayage électronique. Elle est applicable à tout ensemble de réseaux d'antennes (chaque ensemble formant un « panneau ») dotés de la capacité de déphaser le signal appliqué à chacune des antennes ou chacun des sous-groupes d'antennes constituant le réseau, dans le but de modifier le diagramme d'antenne (« dépointage électronique »). Les systèmes concernés par l'invention sont notamment des radars et sonars comprenant des panneaux à commande de phase.

La conception de modes de détection (un mode est composé d'une forme d'onde à émettre, d'une durée d'écoute pendant laquelle le réseau numérise les signaux reçus, et d'un ensemble de traitements appliqué aux signaux reçus dans le but de décider -ou non-de la présence d'une cible) est un domaine de recherche actif, particulièrement dans les milieux complexes.

Les milieux complexes sont caractérisés notamment par la présence d'échos de sol dans le signal reçu (modes sol/sol, air/sol ou air/air lorsque le système regarde vers le bas), par la présence d'échos de mer dans le signal reçu, ou plus généralement par la présence de tout écho réel (i.e. n'étant pas du bruit thermique), puissant, et/ou distribué statistiquement selon une loi complexe.

Une méthode aidant à la détection des cibles consiste à estimer le décalage Doppler subi par la forme d'onde émise : les échos de sol et de mer présentent un décalage Doppler de faible amplitude, et prévisible. Par exemple, afin de s'affranchir du fouillis de mer dans la détection des cibles, il est connu de combiner deux observations de la même zone, espacées temporellement d'environ une seconde. Ce délai correspond au temps de corrélation du fouillis de mer. Tout écho puissant présentant un décalage Doppler largement supérieur ou largement inférieur à ceux prévus pour le sol et la mer pourra être considéré comme provenant d'une cible.

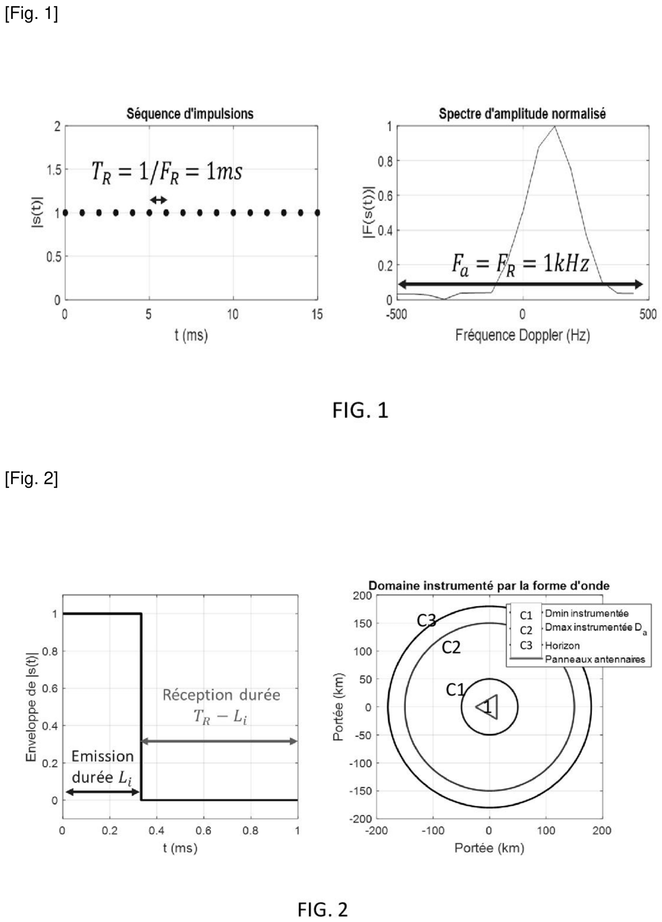

Lors de l'élaboration de la forme d'onde, le concepteur fait face à un ensemble de contraintes posées par les capacités matérielles du système de détection (radar/sonar) ainsi que par le motif de balayage utilisé, limitant les choix possibles sur les formes d'onde. Une des contraintes, bien connues de l'homme du métier, est illustrée par la figure 1.

La partie de gauche de la figure 1 représente la séquence temporelle de $N_{Dop}$ impulsions émises. Chaque pastille symbolise une impulsion, c'est-à-dire une forme d'onde de durée $L_i$ « $T_R$. Après réflexion sur un objet distant, on récupère une séquence de $N_{Dop}$ impulsions reçues à la période $T_R$. La transformée de Fourier de ces $N_{Dop}$ impulsions permet d'obtenir un spectre de fréquence, dont une réalisation est présentée dans la partie droite de la figure 1. Ce spectre comporte $N_{Dop}$ points (puisque calculé sur $N_{Dop}$ impulsions), et a pour largeur spectrale non-ambigüe $F_a = F_R$, en application du théorème de l'échantillonnage.

Sur la partie de droite de la figure 1, on peut voir un pic autour de 200 Hz qui correspond au fouillis de sol. Lors de la détection de cible, si l'écho Doppler de la cible est situé dans le pic, il sera difficile de détecter l'écho, car il faut dans ce cas que l'écho de la cible soit plus puissant que les échos de sol. A contrario, un écho de cible en dehors du pic peut être facilement détectable. En dehors du pic, le spectre de fréquence correspond au bruit thermique. Ainsi, à la frontière entre les deux zones, la régulation de fausse alarme est complexe. Des bruits de natures très différentes (fouillis de mer ou de sol, ou bruit thermique) peuvent se mélanger au milieu du pic (à 200Hz sur la figure 1). Le fait que, le pic se décale en fréquence et s'étale ou s'amincisse d'un tirage à l'autre, complique la régulation de la fausse alarme à la frontière. En effet, d'un tirage à l'autre sur une case fréquence « frontière », il y aura donc parfois du pur bruit thermique, parfois du fouillis de mer très puissant. L'algorithme canonique qui choisit le seuil à appliquer sur chaque case fréquence est perturbé par ce « tout ou rien », et choisit un seuil moyennement haut, ce qui génère donc de la fausse alarme lorsque le pic se décale sur la case considérée.

Les modes cohérents de l'art antérieur (cf. notamment l'article « Radars Traitements avancés du signal radar» J. Darricau, Techniques de l'ingénieur) s'appuyant sur les méthodes connues de balayage, présentent canoniquement les propriétés suivantes :

$$F_a = F_r \quad (1)$$

$$D_a \propto \frac{c_0}{2F_r} \quad (2)$$

La fréquence ambigüe $F_a$ de la séquence d'impulsions intégrée est égale à la fréquence de répétition $F_r$ de ces impulsions, et la distance ambigüe $D_a$ est inversement proportionnelle à $F_r$, avec $c_0$ la vitesse de propagation de l'impulsion dans son milieu. Dans l'art antérieur, $F_a$ et $D_a$ sont donc liées par une relation de proportionnalité inverse, limitant les possibilités de conception de mode cohérent.

La figure 2 illustre la contrainte de la relation (2). La partie de gauche représente les deux phases de fonctionnement d'un radar/sonar à impulsion : émission de durée Li et réception de durée $T_R$ - $L_i$.

La partie de droite illustre la conséquence de ce mode de fonctionnement : sans traitement de levée d'ambiguïté distance, le domaine instrumenté est donné par le disque contenu entre les cercles C1 et C2. Le cercle C1 correspond à la distance minimale instrumentée $D_{min}$ autour du dispositif de détection 1 et le cercle C2 correspond à la distance maximale instrumentée $D_{max}$ (= $D_a$). Le rayon du cercle C2 est donné à un facteur près par la contrainte (2).

Dans l'art antérieur, réduire la largeur spectrale $F_a$ conduit nécessairement à augmenter le domaine instrumenté $D_a$. Etant donné la rotondité de la Terre, il est impossible d'observer une cible d'altitude donnée au-delà d'une certaine distance représentée en figure 2 par le cercle C3 correspondant à la ligne d'horizon. L'agrandissement de $D_a$ au-delà de cet horizon se traduit donc par une durée d'écoute $T_R$ - $L_i$ inutilement grande, ce qui représente du temps perdu pendant lequel aucune nouvelle information utile n'est acquise.

Le procédé de balayage décrit dans la demande de brevet WO 2013/149828 A1 utilise une antenne à balayage mécanique pour balayer l'environnement avec une vitesse de rotation de 60°/s. L'antenne a également des capacités de dépointage électronique pour deux angles prédéfinis par rapport à l'axe de visée du balayage mécanique (-30° et +30°). Le radar re-visite ainsi chaque zone d'intérêt après une courte période de temps (environ une seconde). Cette capacité de « retour en arrière » (look-back mode) permet à la décorrélation naturelle du fouillis de mer d'avoir lieu entre les échantillons initiaux et rétrospectifs de la zone de surveillance.

Ainsi, le procédé de balayage décrit dans la demande de brevet WO 2013/149828 A1 permet la création de modes soumis à la contrainte $F_a < F_R$ dans le cas d'un système radar/sonar doté d'un unique panneau à balayage électronique, monté sur un positionneur mécanique. Ce procédé de balayage n'est cependant pas compatible avec un objectif de couverture à 360° quasi-instantané, du fait de sa conception mono-panneau (un panneau à balayage électronique typique possède généralement une couverture angulaire de 120° maximum).

L'utilisation d'un positionneur mécanique peut permettre d'atteindre progressivement une couverture à 360°, mais cette solution n'est pas satisfaisante du fait des contraintes du positionneur mécanique (inertie mécanique limitant l'agilité de pointage). En outre, la réalisation de modes Doppler couvrant l'entièreté du domaine gisement en un temps inférieur à la seconde (temps de corrélation du fouillis de mer) s'avère très difficilement réalisable en raison des efforts imposés à la mécanique tournante à ces vitesses de balayage.

Il existe donc un besoin pour fournir un procédé de caractérisation de cible pour un dispositif de détection du type radar ou sonar, permettant une plus grande liberté de conception de modes, et permettant de mettre au point des modes Doppler à très faible fréquence ambiguë $F_a$, couvrant l'entièreté du domaine gisement en un temps potentiellement inférieur à la seconde, et observant l'ensemble des directions de façon quasi-simultanée.

**Résumé de l'invention**

Un objet de l'invention est donc un procédé de caractérisation de cible pour un dispositif de détection du type radar ou sonar multi-panneaux à balayage électronique, comprenant les étapes consistant à :

- générer une pluralité d'impulsions sur une pluralité de panneaux d'antenne du dispositif de détection selon un motif d'entrelacement temporel et angulaire, de façon à effectuer un balayage sur tout le domaine gisement du dispositif de détection ;
- générer une pluralité de cartes de détection, par acquisition d'une pluralité d'observations combinées entre elles par intégration cohérente ou non cohérente des échos correspondant à la pluralité d'impulsions, chaque carte de détection étant obtenue dans une direction donnée correspondant à la largeur du lobe principal du panneau d'antenne ;
- combiner les cartes de détection de façon à détecter une présence d'une cible dans le domaine gisement du dispositif de détection.

Avantageusement, le motif d'entrelacement comprend une émission séquentielle des impulsions de fréquences d'émission différentes dans une pluralité de directions, chaque direction étant associée à un ensemble de fréquences d'émissions, les fréquences d'émission étant utilisées de façon cyclique dans une même direction, les impulsions étant espacées par une période de répétition prédéfinie d'une direction à l'autre, la période ambiguë entre deux impulsions de même fréquence dans une même direction à l'issue de chaque balayage sur le domaine gisement étant supérieure à la période de répétition.

En variante, le motif d'entrelacement comprend une émission séquentielle des impulsions de même fréquence d'émission dans une pluralité de directions, les impulsions de même fréquence étant espacées par une période de répétition prédéfinie, la fréquence d'émission étant modifiée à l'issue de chaque balayage sur le domaine gisement, la période ambiguë entre deux émissions de même fréquence dans une même direction étant supérieure à la période de répétition.

En variante, le motif d'entrelacement comprend une émission séquentielle d'impulsions ayant différentes fréquences d'émission dans une même direction, les impulsions étant espacées par une période de répétition prédéfinie, la période ambigüe entre deux émissions de même fréquence dans une même direction, à l'issue de chaque balayage sur le domaine gisement, étant supérieure à la période de répétition.

Avantageusement, la période de répétition et la période ambigüe sont déterminées de façon à ce que :

$$\Delta_G \gg \theta_{3dB}$$

Avec $\Delta G = \frac{G_{max} - G_{min}}{Nb_{pointages}}$ et $Nb_{pointages} = rnd\left(\frac{T_A}{T_R}\right)$

Dans lequel $G_{max}$ - $G_{min}$ correspond au domaine gisement à couvrir, et $\theta_{3dB}$ correspond à la largeur du lobe principal.

Avantageusement, une intégration cohérente est effectuée sur les impulsions d'une même direction et d'une même fréquence d'émission.

Avantageusement, le motif d'entrelacement est répété, en appliquant, à chaque répétition, un décalage angulaire égal à la largeur du lobe principal.

Avantageusement, l'entrelacement est étalé sur trois panneaux à commande de phase, le domaine gisement à couvrir étant égal à 360°.

Avantageusement, les impulsions sont générées sur un nombre de fréquence d'émission compris entre deux et six inclus.

L'invention se rapporte aussi à un dispositif de détection du type radar ou sonar multi-panneaux à balayage électronique, le dispositif de détection étant configuré pour :

- générer une pluralité d'impulsions sur une pluralité de panneaux d'antenne du dispositif de détection selon un motif d'entrelacement temporel et angulaire, de façon à effectuer un balayage sur tout le domaine gisement du dispositif de détection
- générer une pluralité de cartes de détection, par acquisition d'une pluralité d'observations combinées entre elles par intégration cohérente ou non cohérente des échos correspondant à la pluralité d'impulsions, chaque carte de détection étant obtenue dans une direction donnée correspondant à la largeur du lobe principal du panneau d'antenne ;
- combiner les cartes de détection de façon à détecter une présence d'une cible dans le domaine gisement du dispositif de détection.

**Description des figures**

D'autres caractéristiques, détails et avantages de l'invention ressortiront à la lecture de la description faite en référence aux dessins annexés donnés à titre d'exemple.

La figure 1, déjà décrite, illustre le lien entre forme d'onde et spectre de fréquence.

La figure 2, déjà décrite, illustre le lien entre forme d'onde et domaine instrumenté.

La figure 3 illustre un motif d'entrelacement selon un premier mode de réalisation.

La figure 4 illustre un motif d'entrelacement selon un deuxième mode de réalisation, sur plusieurs panneaux, de façon à effectuer un balayage complet.

La figure 5 illustre un motif d'entrelacement selon un troisième mode de réalisation.

Le procédé selon l'invention comprend une première étape dans laquelle une pluralité d'impulsions est générée sur une pluralité de panneaux d'antenne du dispositif de détection, selon un motif d'entrelacement temporel et angulaire, de façon à couvrir l'intégralité du domaine gisement du dispositif de détection. On entend par « l'intégralité du domaine gisement » au moins un balayage complet, sur le domaine gisement à couvrir.

Le dispositif de détection comprend avantageusement trois panneaux, de façon à ce que chaque panneau ait une couverture sensiblement égale à ±60°. L'invention n'est toutefois pas limitée à trois panneaux, et d'autres configurations peuvent être envisagées, par exemple avec quatre panneaux.

Dans une deuxième étape, plusieurs cartes de détection sont générées. Pour cela, les observations des échos correspondant aux impulsions émises dans la première étape sont intégrées. L'intégration peut être cohérente (phase cohérente entre émission et réception) ou non cohérente. Chaque carte de détection est obtenue dans une direction donnée correspondant à la largeur du lobe principal du panneau d'antenne.

Dans le cas où l'intégration est non-cohérente, la carte de détection est une carte distance/récurrence, et non pas une carte Doppler (pas de transformée de Fourier). Dans le cas où l'intégration est cohérente, la carte de détection est une carte distance/fréquence (également appelée carte Doppler dans l'état de la technique). Dans la présente demande, il est fait mention de cartes de détection, ce qui englobe les cartes distance/récurrence et les cartes distance/fréquence.

Les cartes de détection sont ensuite combinées de façon à détecter une présence d'une cible dans le domaine gisement du dispositif de détection. La combinaison des cartes de détection, ou traitement de post-intégration, est bien connue de l'homme du métier. Les cartes de détection établies pour une même direction peuvent être combinées, par exemple, en sommant le module au carré de chaque carte de détection, ou par toute autre fonction conduisant à former une statistique de test maximisant la probabilité de détection pour un taux de fausse alarme donné.

Ainsi, le fait d'obtenir une carte de détection quasi-simultanément, dans plusieurs directions, grâce à l'entrelacement temporel et angulaire, permet de concevoir des nouveaux modes Doppler à une très faible fréquence ambiguë $F_a$, inférieure à la fréquence de répétition des impulsions $F_r$.

Les trois étapes sont réitérées autant de fois que nécessaire en fonction de la mission confiée au dispositif de détection.

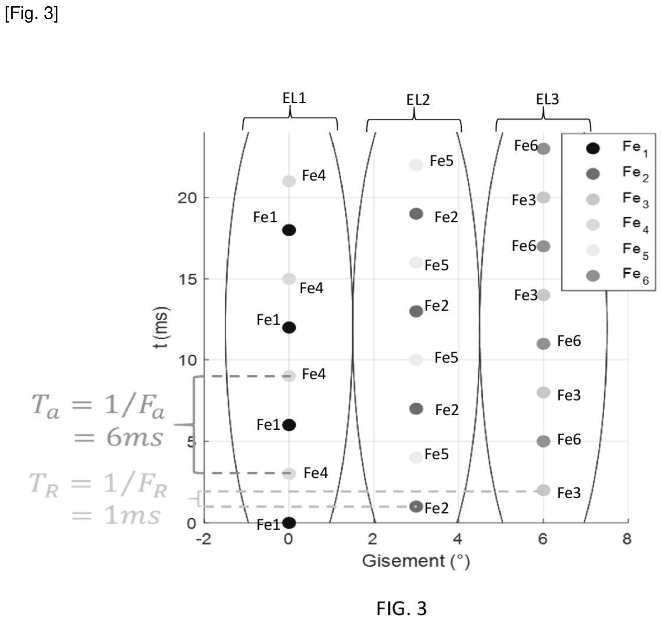

Un premier mode de réalisation de l'invention est représenté sur la figure 3.

Selon ce premier mode de réalisation, le motif d'entrelacement comprend une émission séquentielle des impulsions de fréquences d'émission différentes dans une pluralité de directions. Les ellipses EL schématisent la largeur du lobe principal du diagramme de rayonnement du panneau émetteur, et donc la direction de pointage.

Chaque direction est associée à un ensemble de fréquences d'émission, les fréquences d'émission étant utilisées de façon cyclique dans une même direction. Dans la figure 3, chaque ensemble est composé de deux fréquences d'émission et forme une paire unique de fréquences d'émissions (Fe1/Fe4 pour la direction EL1, Fe2/Fe5 pour la direction EL2, et Fe3/Fe6 pour la direction EL3). Le mode de réalisation n'est pas limité à un ensemble de deux fréquences différentes, et peut être étendu à un nombre supérieur de fréquences d'émission différentes. Chaque pastille correspond à une impulsion émise, avec une fréquence d'émission parmi Fe1, Fe2, Fe3, Fe4, Fe5 et Fe6. Les ellipses EL1, EL2 et EL3 schématisent la largeur du lobe principal du diagramme de rayonnement du panneau émetteur. Les impulsions sont espacées par une période de répétition prédéfinie $T_R$ d'une direction à l'autre. La période ambiguë Ta entre deux émissions de même fréquence dans une même direction à l'issue de chaque balayage sur le domaine gisement est supérieure à la période de répétition $T_R$.

La séquence représentée sur la figure 3 comporte vingt-quatre impulsions successives émises à la cadence $F_R$, Ces impulsions sont entrelacées angulairement (changement régulier de direction de pointage, ici avec une cadence $F_R$ de façon à observer l'ensemble des directions de façon quasi-simultanée durant la durée d'intégration) et temporellement (changement de pointage et/ou de fréquence d'émission à une cadence très supérieure à la fréquence ambiguë des cartes de détection).

A l'instant initial, une impulsion à la fréquence Fe1 est émise. Après une période $T_R$, une impulsion à la fréquence Fe2 est émise avec le même panneau, le lobe principal étant dépointé. Après une nouvelle période $T_R$, une impulsion à la fréquence Fe3 est émise avec le même panneau, le lobe principal étant dépointé, et ainsi de suite. La période ambiguë correspond au délai entre deux impulsions de même fréquence, dans un même lobe principal d'antenne (même direction).

Dans le cadre de l'invention, il n'est pas nécessaire que différentes fréquences soient émises. Le fait d'émettre les impulsions sur différentes fréquences est préférable car cela permet d'obtenir des échos de cibles indépendants, ce qui rend plus efficace le post-traitement. Avec une seule fréquence d'émission, les échos de cibles, qui seraient faiblement séparés temporellement, seraient fortement corrélés entre eux, et peu d'information pourrait ainsi être extraite des échos par les post-traitements.

Le procédé selon l'invention fonctionne, de façon optimale, avec un nombre de fréquences d'émission compris entre 2 et 6.

Ainsi, l'invention met en œuvre un entrelacement angulaire, temporel, et optionnellement fréquentiel.

Ainsi, l'intégration cohérente (usuellement une transformée de Fourier) peut être réalisée uniquement sur les impulsions d'une même direction et d'une même fréquence d'émission.

Il est rappelé que l'intégration cohérente est effectuée sur une unique fréquence d'émission, et le post-traitement (post-intégration) est effectué sur une pluralité de fréquences d'émission.

Le spectre ainsi obtenu résulte d'échantillons intégrés à la cadence $F_a = F_R/Nb_{Fe}$ (où $Nb_{Fe}$ correspond au nombre de fréquences d'émission), tout en émettant les impulsions à la cadence $F_R$,

Ainsi, $T_a > T_R$, c'est-à-dire $F_a < F_R$

Sur la figure 3, $T_a = 6$ ms et $T_R = 1$ ms

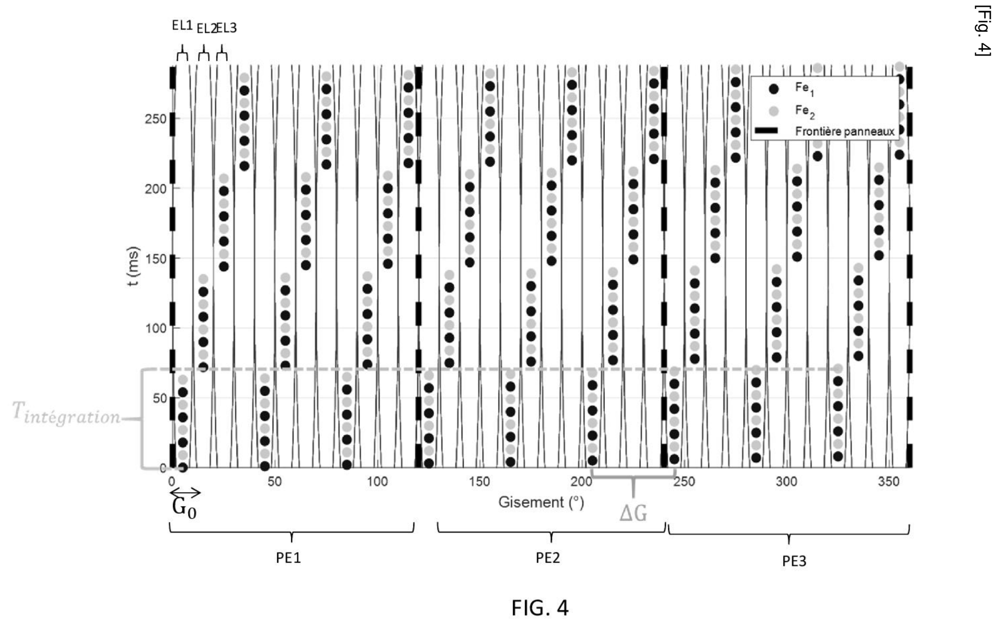

La figure 4 illustre un autre mode de réalisation, dans lequel l'intégralité du domaine gisement est couverte, en utilisant plusieurs panneaux. Les différents panneaux émetteurs (PE1, PE2, PE3) sont séparés, sur la figure 4, par un trait vertical en pointillés.

Sur la figure 4, les impulsions sont générées avec une première fréquence Fe1, dans différentes directions, et en utilisant plusieurs panneaux, de façon à balayer tout le domaine gisement. Lorsque le balayage complet a été effectué, les impulsions sont générées avec au moins une deuxième fréquence Fe2, dans différentes directions, et en utilisant plusieurs panneaux, de façon à balayer tout le domaine gisement.

Sur la figure 4, l'entrelacement angulaire couvre 360°, et est étalé pour l'exemple sur trois panneaux à balayage électronique, chaque panneau couvrant ici un secteur de 120° de gisement. Pendant la durée d'intégration, toutes les directions sont donc observées quasi-simultanément, sans avoir à effectuer de retour en arrière.

Les pointages successifs sont espacés en gisement de $\Delta_G = 360°/Nb_{pointages}$.

Avec $\Delta G = \frac{G_{max} - G_{min}}{Nb_{pointages}}$ et $Nb_{pointages} = rnd\left(\frac{T_A}{T_R}\right)$

Dans lequel $G_{max} - G_{min}$ correspond au domaine gisement à couvrir (360° ou moins), $\theta_{3dB}$ correspond à la largeur du lobe principal (largeur communément mesurée à -3 dB), et $rnd()$ correspond à la fonction qui renvoie un arrondi à l'unité.

Par exemple, pour tenir une fréquence ambiguë de consigne $F_a$ = 55 *Hz,* avec neuf pointages sur un balaye complet d'antenne, l'espacement entre les pointages successifs peut être fixé à $\Delta_G = 40°$.

Lorsque $\Delta_G \gg \theta_{3dB}$, il n'est plus nécessaire de séparer fréquentiellement les différents pointages successifs, ce qui permet de diminuer fortement le nombre de fréquence d'émissions utilisées. Ce mode de réalisation permet avantageusement de n'utiliser que deux fréquences d'émission Fe1 et Fe2, alors que dans l'exemple de la figure 3, six fréquences d'émission sont utilisées.

La détermination de $\Delta_G$, pour être très supérieur à $\theta_{3dB}$, dépend notamment du diagramme antennaire, l'objectif étant de se rendre insensible à un potentiel écho de seconde récurrence qui serait reçu au travers d'un lobe secondaire du diagramme antennaire. Ce paramétrage peut être réalisé par l'homme du métier à l'aide ses connaissances générales.

Avantageusement, une intégration cohérente est effectuée sur les impulsions d'une même direction et d'une même fréquence d'émission. L'intégration est effectuée sur une période d'intégration $T_{intégration}$ définie par la relation suivante :

$$T_{intégration} = Nb_{pointages} \cdot Nb_{fe} \cdot N_{Dop} \cdot T_R$$

$N_{Dop}$ correspond au nombre d'impulsions sur lequel la transformée de Fourier est calculée.

Dans l'exemple de la figure 4, $T_{intégration}$ = 72 ms.

A l'issue d'une période d'intégration $T_{intégration}$, on obtient ainsi un ensemble de cartes de détection de largeur spectrale $F_a \ll F_R$, réparties sur 360°, construites quasi-simultanément, et séparées angulairement de $\Delta G = 360°/Nb_{poin-tages}$.

A raison de $Nb_{Fe}$ cartes de détection indépendantes dans chaque direction de pointage, ces $Nb_{Fe}$ cartes de détection peuvent être combinées afin de caractériser les cibles dans le domaine de couverture.

Afin de combler les zones aveugles entre deux cartes de détection successives, le motif d'entrelacement, de durée $T_{intégration}$, est répété, en appliquant, à chaque répétition, un décalage angulaire $G_0$ égal ou sensiblement égal à la largeur du lobe principal $\theta_{3dB}$. On obtient ainsi, au terme du motif d'entrelacement complet de la figure 4, $Nb_{Fe}$ cartes de détection dans chaque direction, sans aucun trou d'observation, avec un balayage monotone en gisement, c'est-à-dire sans aucun retour en arrière.

Lors de la conception du mode Doppler, il est possible de jouer sur la durée des trous d'observation de largeur $\Delta Trou \approx \Delta G - \theta_{3dB}$ pour balayer l'intégralité du domaine gisement sur la seule durée $T_{intégration}$, tout en respectant les consignes liées à la fréquence de répétition $F_R$ et $F_a < F_R$.

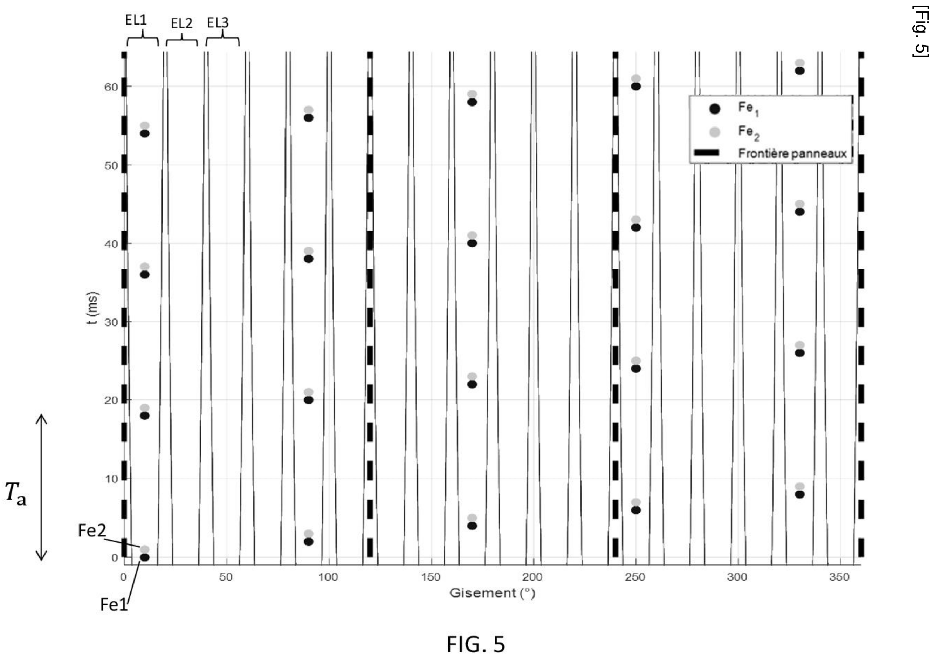

Selon un autre mode de réalisation, illustré par la figure 5, le motif d'entrelacement comprend une émission séquentielle d'impulsions ayant différentes fréquences d'émission dans une même direction (Fe1 et Fe2 sur la figure 5, généralisable à plus de deux fréquences d'émission), puis un balayage de façon à émettre les impulsions ayant différentes fréquences d'émission dans une autre direction.

Ainsi, le mode de réalisation illustré par la figure 5 prévoit de changer de direction de pointage une fois que toutes les impulsions sur fréquences d'émission ont été émises, alors que d'après le premier mode de réalisation, la fréquence d'émission change une fois que tous les pointages ont été effectués avec la même fréquence.

Dans le mode de réalisation illustré par la figure 5, deux impulsions successives de fréquences différentes sont espacées d'une période de répétition $T_R$ (difficilement visible sur la figure 5 car très petite), et les impulsions d'une même fréquence, dans une même direction définie par le lobe principal du panneau, sont espacées d'une période ambiguë $T_a$. Les impulsions sont émises dans la même direction avec la même fréquence d'émission après balayage complet du domaine gisement.

Les modes de réalisation illustrés par les figures 3 et 4 permettent de bien décorréler les observations, et donc de mieux les moyenner en post-intégration. En effet, en considérant une direction de pointage, le délai entre deux impulsions de fréquences différentes est plus élevé dans les modes de réalisation illustrés par les figures 3 et 4 que dans le mode de réalisation illustré par la figure 5. En effet, dans le mode de réalisation illustré par la figure 5, les cartes de détection qui sont décalées en fréquence (émission sur Fe1 et Fe2), mais ne sont très peu décalées temporellement. Or, lorsque les observations sont très rapprochées temporellement, les observations sont fortement corrélées donc porteuses de très peu d'information.

Le procédé décrit selon l'un ou l'autre des modes de réalisation permet de concevoir une nouvelle classe de modes Doppler à très faible fréquence ambigüe $F_a$, avec une fréquence de récurrence élevée $F_R > F_a$, et exploitant l'agilité de balayage électronique pour produire très rapidement des cartes de détection sur tout le domaine gisement (360°). Ainsi, les cartes de détection peuvent être produites au bout d'un délai $T_{intégration}$ (environ 100 ms) si l'on tolère un espacement angulaire des cartes de détection égal à $\Delta$Trou, ou à l'issue d'un délai $T_{intégration} \cdot \Delta$Trou$/\theta_{3dB}$ (environ 1 s) si l'on supprime les trous angulaires.

Un exemple de conception du mode Doppler illustré par la figure 4 est décrit ci-après.

Le concepteur du mode définit en premier lieu :

- Une distance maximale instrumentée $D_a \propto c_0/(2. F_R)$, avec $c_0$ la vitesse de propagation de l'impulsion émise
- Une largeur spectrale de consigne $F_a < F_R$
- Le nombre d'impulsions intégrées $N_{Dop}$ pour former chaque carte DaVa (carte de détection ou encore carte Distance Ambigüe Vitesse Ambigüe)

- Le temps de rafraichissement $T_{Raf} = Nb_{DaVa} \cdot \left( \frac{G_{max} - G_{min}}{\alpha.\theta_G} \cdot \frac{N_{Dop}}{F_R} \right)$, avec

    --- $Nb_{DaVa}$ le nombre de carte DaVa souhaité dans chaque direction, à des fins de post-intégration ou tout autre traitement

    --- $G_{max}$ - $G_{min}$ le domaine gisement à couvrir

    --- $\alpha > 0$ un scalaire fixant l'espacement angulaire entre les différentes directions d'observation

    --- $\alpha \leq 1$ : Pas de directions aveugles

    --- $\alpha > 1$ : Directions aveugles tolérées de façon à diminuer $T_{Raf}$

Ces paramètres étant fixés, les paramètres secondaires peuvent être obtenus :

$$Nb_{Fe} = Nb_{DaVa}$$

$$Nb_{pointages} = rnd\left(\frac{F_R}{F_a}\right)$$, avec rnd(.) l'opérateur d'arrondi

$$\Delta G = \frac{G_{max} - G_{min}}{Nb_{pointages}}$$

$$T_{intégration} = N_{Dop}/F_a + \left( (Nb_{pointages} - 1). Nb_{Fe} + Nb_{Fe} - 1 \right)/F_R$$

Le motif élémentaire de durée $T_{intégration}$ est répété $Nb_{motif} = rnd\left(\frac{\Delta G}{\alpha.\theta_{3dB}}\right)$ fois, en appliquant à chaque répétition i un offset angulaire $G_0(i) = i.\frac{\Delta G}{Nb_{motif}}$, de façon à combler les directions aveugles.

**Revendications**

1.  Procédé de caractérisation de cible pour un dispositif de détection du type radar ou sonar multi-panneaux à balayage électronique, comprenant les étapes consistant à :

    - générer une pluralité d'impulsions sur une pluralité de panneaux d'antenne (PE1, PE2, PE3) du dispositif de détection selon un motif d'entrelacement temporel et angulaire, de façon à effectuer un balayage sur tout le domaine gisement du dispositif de détection ;
    - générer une pluralité de cartes de détection, par acquisition d'une pluralité d'observations combinées entre elles par intégration cohérente ou non cohérente des échos correspondant à la pluralité d'impulsions, chaque carte de détection étant obtenue dans une direction donnée (EL1, EL2, EL3) correspondant à la largeur du lobe principal du panneau d'antenne ;
    - combiner les cartes de détection de façon à détecter une présence d'une cible dans le domaine gisement du dispositif de détection,

    le procédé étant **caractérisé en ce que** le motif d'entrelacement comprend une émission séquentielle des impulsions de fréquences d'émission différentes dans une pluralité de directions (EL1, EL2, EL3), chaque direction étant associée à un ensemble de fréquences d'émissions (Fe1/Fe4, Fe2/Fe5, Fe3/Fe6), les fréquences d'émission étant utilisées de façon cyclique dans une même direction, les impulsions étant espacées par une période de répétition prédéfinie ($T_R$) d'une direction à l'autre, la période ambiguë ($T_a$) entre deux impulsions de même fréquence dans une même direction à l'issue de chaque balayage sur le domaine gisement étant supérieure à la période de répétition ($T_R$).

2.  Procédé selon la revendication 1, dans lequel la période de répétition ($T_R$) et la période ambigüe ($T_a$) sont déterminées de façon à ce que

$$\Delta_G \gg \theta_{3dB}$$

Avec $\Delta G = \frac{G_{max} - G_{min}}{Nb_{pointages}}$ et $Nb_{pointages} = rnd\left(\frac{T_A}{T_R}\right)$ Dans lequel $G_{max}$ - $G_{min}$ correspond au domaine gisement à couvrir, et $\theta_{3dB}$ correspond à la largeur du lobe principal.

3.  Procédé selon l'une des revendications précédentes, dans lequel une intégration cohérente est effectuée sur les impulsions d'une même direction et d'une même fréquence d'émission.

4.  Procédé selon l'une des revendications précédentes, dans lequel le motif d'entrelacement est répété, en appliquant, à chaque répétition, un décalage angulaire ($G_0$) égal à la largeur du lobe principal ($\theta_{3dB}$).

5.  Procédé selon l'une des revendications précédentes, dans lequel l'entrelacement est étalé sur trois panneaux à commande de phase (PE1, PE2, PE3), le domaine gisement à couvrir étant égal à 360°.

6.  Procédé selon l'une des revendications précédentes, dans lequel les impulsions sont générées sur un nombre de fréquence d'émission compris entre deux et six inclus.

7.  Dispositif de détection du type radar ou sonar multi-panneaux à balayage électronique, le dispositif de détection étant configuré pour :

    - générer une pluralité d'impulsions sur une pluralité de panneaux d'antenne du dispositif de détection selon un motif d'entrelacement temporel et angulaire, de façon à effectuer un balayage sur tout le domaine gisement du dispositif de détection
    - générer une pluralité de cartes de détection, par acquisition d'une pluralité d'observations combinées entre elles par intégration cohérente ou non cohérente des échos correspondant à la pluralité d'impulsions, chaque carte de détection étant obtenue dans une direction donnée correspondant à la largeur du lobe principal du panneau d'antenne ;
    - combiner les cartes de détection de façon à détecter une présence d'une cible dans le domaine gisement du dispositif de détection,

    le dispositif étant **caractérisé en ce que** le motif d'entrelacement comprend une émission séquentielle des impulsions de fréquences d'émission différentes dans une pluralité de directions (EL1, EL2, EL3), chaque direction étant associée à un ensemble de fréquences d'émissions (Fe1/Fe4, Fe2/Fe5, Fe3/Fe6), les fréquences d'émission étant utilisées de façon cyclique dans une même direction, les impulsions étant espacées par une période de répétition prédéfinie ($T_R$) d'une direction à l'autre, la période ambiguë ($T_a$) entre deux impulsions de même fréquence dans une même direction à l'issue de chaque balayage sur le domaine gisement étant supérieure à la période de répétition ($T_R$).

[Fig. 1]

**FIG. 1**

[Fig. 2]

**FIG. 2**

[Fig. 3]

FIG. 3

[Fig. 4]

EP 4 749 326 A2

FIG. 4

[Fig. 5]

EP 4 749 326 A2

FIG. 5

**RÉFÉRENCES CITÉES DANS LA DESCRIPTION**

**Documents brevets cités dans la description**

- WO 2013149828 A1